# EUROPÄISCHE PATENTANMELDUNG

(11) **EP 1 600 745 A2**
(43) Veröffentlichungstag der Anmeldung: **30.11.2005**
(21) Anmeldenummer: 05009190.9
(22) Anmeldetag: 27.04.2005
(51) Int. Cl.: G01F 1/84

(54) **Coriolis-Massendurchflussmessgerät**

(30) Priorität: 26.05.2004 DE 102004026322
(71) Anmelder: Krohne AG, 4019 Basel (CH)
(72) Erfinder: Hussain, Youssif, Dr., Weston Favell Northhampton NN3 3DA (GB); Rolph, Chris, Salcey Lawn Hartwell Northampton NN7 2HA (GB); Harrisson, Neil, Duston Northampton NN5 6SR (GB)
(74) Vertreter: Gesthuysen, von Rohr & Eggert

(57) **Zusammenfassung**

Dargestellt und beschrieben ist ein Coriolis-Massendurchflußmeßgerät, mit einem Meßrohr (1) zum Führen eines strömenden Mediums, einem ersten Schwingungserzeuger (2) zur Schwingungsanregung des Meßrohrs (1) und einem ersten Schwingungsaufnehmer (3) und einem zweiten Schwingungsaufnehmer (4) zur Erfassung von Coriolis-Schwingungen des Meßrohrs (1), wobei der erste Schwingungserzeuger (2), der erste Schwingungsaufnehmer (3) und der zweite Schwingungsaufnehmer (4) in Längsrichtung des Meßrohrs (1) gesehen jeweils voneinander beabstandet sind und der erste Schwingungserzeuger (2) von einer Schwingungsanregungssteuereinrichtung (9) angesteuert wird. Erfindungsgemäß ist ein dritter Schwingungsaufnehmer (5) vorgesehen, der dem ersten Schwingungserzeuger (2) auf der gleichen Länge des Meßrohrs (1) gegenüberliegt. Zusätzlich oder alternativ dazu können ein zweiter Schwingungserzeuger (6) und ein dritter Schwingungserzeuger (3) vorgesehen sein, wobei der zweite Schwingungserzeuger (6) dem ersten Schwingungsaufnehmer (3) und der dritte Schwingungserzeuger (7) dem zweiten Schwingungsaufnehmer (4) auf der jeweils gleichen Länge des Meßrohrs (1) gegenüberliegt. Ist darüber hinaus vorgesehen, daß alle Schwingungserzeuger (2, 6, 7) und Schwingungsaufnehmer (3, 4, 5), die sich einander gegenüberliegen, jeweils die gleiche Masse aufweisen, wird ein "ausbalanciertes" Meßrohr (1) erzielt, und es eröffnen sich verschiedene Möglichkeiten, die Auswertung und Ansteuerung des erfindungsgemäßen Coriolis-Massendurchflußmeßgeräts zu verbessern, wodurch Reproduzierbarkeit und Meßgenauigkeit erhöht werden.

## Beschreibung

Die Erfindung betrifft ein Coriolis-Massendurchflußmeßgcrät, mit einem Meßrohr zum Führen eines strömenden Mediums, einem ersten Schwingungserzeuger zur Schwingungsanregung des Meßrohrs und einem ersten Schwingungsaufnehmer und einem zweiten Schwingungsaufnehmer zur Erfassung von Schwingungen des Meßrohrs, wobei der erste Schwingungserzeuger, der erste Schwingungsaufnehmer und der zweite Schwingungsaufnehmer in Längsrichtung des Meßrohrs gesehen jeweils voneinander beabstandet sind und der erste Schwingungserzeuger von einer Schwingungsanregungssteuereinrichtung angesteuert wird.

Ein derartiges Coriolis-Massendurchflußmeßgerät ist aus der WO 95/16897 A2 bekannt. Bei dem dort beschriebenen Coriolis-Massendurchtlußmeßgerät ist vorgesehen, Umfangsschwingungen des Meßrohrs anzuregen, also derartige Schwingungen, bei denen sich der Querschnitt des Meßrohrs wenigstens im Bereich der Schwingungsanregung aufgrund der Schwingung geometrisch ändert. Ein Coriolis-Massendurchflußmeßgerät, bei dem eine ähnliche Schwingungsanregung von Umfangsschwingungen des Meßrohrs vorgesehen ist, ist in der WO 01/92833 Al beschrieben. Das dort beschriebene Coriolis-Massendurchflußmeßgerät zeichnet sich insbesondere dadurch aus, daß das Meßrohr eine derartige Wandstärke aufweist, die wesentlich geringer als der Radius des Meßrohrs ist, so daß Umfangsschwingungen, die mit einer Deformation der Mantelflächen des Meßrohrs einhergehen, besonders einfach erzeugbar sind. Darüber hinaus ist bei diesem Coriolis-Massendurchflußzneßgerät vorgesehen, daß die Länge des Meßrohrs wenigstens in der gleichen Größenordnung des Radius des Meßrohrs liegt. Das in der WO 01/92833 A1 beschriebene Coriolis-Massendurchflußmeßgerät weist damit ein derartiges Meßrohr auf, das aufgrund seiner Kürze und seiner großen lichten Weite nur eine geringe Drosselung des Stroms des Mediums zur Folge hat und damit nur geringe Störwirkungen auf den Fluß im Rohrsystem aufweist, in das das Coriolis-Massendurchflußmeßgerät eingebaut ist.

Problematisch bei den aus dem Stand der Technik bekannten Coriolis-Massendurchflußmeßgeräten ist jedoch, daß die erzielbare Meßgenauigkeit unbefriedigend ist, insbesondere häufige Nachkalibrierungen erforderlich sind.

Damit ist es die Aufgabe der Erfindung, ein derartiges Coriolis-Massendurchflußmeßgerät anzugeben, das eine hohe Meßgenauigkeit aufweist.

Ausgehend von dem eingangs beschriebenen Coriolis-Massendurchflußmeßgerät ist die zuvor hergeleitete und aufgezeigte Aufgabe dadurch gelöst, daß ein dritter Schwingungsaufnehmer vorgesehen ist, der dem ersten Schwingungserzeuger auf der gleichen Länge des Meßrohrs gegenüberliegt.

Erfindungsgemäß ist also dem ersten Schwingungserzeuger unter einem Winkel von 180° gegenüberliegend ein dritter Schwingungsaufnehmer an der gleichen Längserstreckung des Meßrohrs angeordnet, so daß mit dem dritten Schwingungsaufnehmer z. B. die Anregungsschwingung erfaßt werden kann. Ist darüber hinaus gemäß einer bevorzugten Weiterbildung der Erfindung vorgesehen, daß die Masse des ersten Schwingungserzeugers im wesentlichen der Masse des dritten Schwingungsaufnehmers entspricht, so wird ein "ausbalanciertes" Meßrohr erzielt. Weiterhin kann gemäß einer bevorzugten Weiterbildung der Erfindung vorgesehen sein, daß das von dem dritten Schwingungsaufnehmer erfaßte Schwingungssignal zur Schwingungsanregungssteuereinrichtung zurückgeführt und dort als Feedback-Signal zur Steuerung der Schwingungsanregung verwendet wird.

Schon mit den, wie zuvor beschrieben, ausgestalteten Coriolis-Massendurchflußmeßgeräten kann eine wesentliche Verbesserung der Meßgenauigkeit erzielt werden, insbesondere bei der Anregung von Umfangsschwingungen des Meßrohres. Gemäß einer bevorzugten Weiterbildung der Erfindung ist nunmehr noch vorgesehen, daß zusätzlich ein zweiter Schwingungserzeuger und ein dritter Schwingungserzeuger verwendet werden, wobei der zweite Schwingungserzeuger dem ersten Schwingungsaufnehmer und der dritte Schwingungserzeuger dem zweiten Schwingungsaufnehmer auf der jeweils gleichen Länge des Meßrohrs gegenüberliegt. Dabei kann gemäß einer bevorzugten Weiterbildung der Erfindung feiner vorgesehen sein, daß die Masse des zweiten Schwingungserzeugers im wesentlichen der Masse des ersten Schwingungserzeugers entspricht und die Masse des dritten Schwingungserzeugers im wesentlichen der Masse des zweiten Schwingungsaufueluners entspricht, was wiederum zu einem "ausbalancierten" Meßrohr führt.

Ausgehend von dem eingangs beschriebenen Coriolis-Massendurchflußmeßgerät ist die weiter oben hergeleitete und aufgezeigte Aufgabe femer dadurch gelöst, daß ein zweiter Schwingungserzeuger und ein dritter Schwingungserzeuger vorgesehen sind, ohne daß ein dritter Schwingungsaufnehmer vorgesehen ist, wobei der zweite Schwingungserzeuger dem ersten Schwingungsaufnehmer und der dritte Schwingungserzeuger dem zweiten Schwingungsaufnehmer auf der jeweils gleichen Länge des Meßrohrs gegenüberliegt. Das Vorsehen eines zweiten Schwingungsezzeugers und eines dritten Schwingungserzeugers kann nämlich unabhängig davon, ob ein dritter Schwingungsaufnehmer vorgesehen ist, insofern Vorteile bieten, als daß damit Schwingungsanregungen des Meßrohrs möglich werden, die eine Echtzeitbestimmung von charakteristischen Eigenschaften des Coriolis-Massendurchflußmeßgeräts, wie dessen Nullpunkt und dessen Sensitivität, erlauben, für welche Technik auf die DE 100 02 635 Al verwiesen wird.

Auch hierbei ist gemäß einer bevorzugten Weiterbildung der Erfindung vorgesehen, daß die Masse des zweiten Schwingungserzeugers im wesentlichen der Masse des ersten Schwingungsaufnehmers entspricht und die Masse des dritten Schwingungserzeugers im wesentlichen der Masse des zweiten Schwingungsaufnehmers entspricht, um ein "ausbalanciertes" Meßrohr zu erzielen.

Wenn zuvor gesagt worden ist, daß ein zweiter Schwingungserzeuger und ein dritter Schwingungserzeuger vorgesehen sein können, ohne daß ein dritter Schwingungsaufnehmer vorgesehen ist, so gilt gleichwohl, daß es ganz besonders bevorzugt ist, wenn gleichzeitig ein zweiter Schwingungserzeuger, ein dritter Schwingungserzeuger und ein dritter Schwingungsaufnehmer vorgesehen sind, die dem ersten Schwingungsaufnehmer, dem ersten Schwingungserzeuger bzw. dem zweiten Schwingungsaufnehmer jeweils gegenüberliegen und dabei jeweils die gleiche Masse wie der jeweils gegenüberliegende Schwingungsaufnehmer bzw. Schwingungserzeuger aufweisen. Ein derartiges Coriolis-Massendurchflußmeßgerät weist nämlich wesentliche zusätzliche Funktionalitäten auf, die die Meßgenauigkeit und die Reproduzierbarkeit wesentlich verbessern können, wobei darüber hinaus ein "ausbalanciertes" Meßrohr erzielt wird.

Grundsätzlich sind die Abstände zwischen dem ersten Schwingungsaufnehmer und dem ersten Schwingungserzeuger bzw. dem zweiten Schwingungsaufnehmer und dem ersten Schwingungserzeuger frei wählbar. Gemäß einer bevorzugten Weiterbildung der Erfindung ist jedoch vorgesehen, daß der erste Schwingungsaufnehmer und der zweite Schwingungsaumehmer im jeweils gleichen Abstand vom ersten Schwingungserzeuger auf zwei voneinander verschiedenen Seiten des ersten Schwingungserzeugers vorgesehen sind. Dementsprechend sind dann auch, falls vorgesehen, der zweite Schwingungserzeuger und der dritte Schwingungserzeuger jeweils im gleichen Abstand vom dritten Schwingungsaufnehmer auf einander gegenüberliegenden Seiten desselben angeordnet.

Weiterhin ist es gemäß einer bevorzugten Weiterbildung der Erfindung vorgesehen, daß der erste Schwingungserzeuger, der erste Schwingungsaufnehmer und der zweite Schwingungsaufnehmer längs einer Geraden angeordnet sind. Damit ist verbunden, daß, falls vorgesehen, auch der zweite Schwingungserzeuger, der dritte Schwingungserzeuger und der dritte Schwingungsaufnehmer längs einer Geraden angeordnet sind. Weiterhin ist besonders bevorzugt, daß ein, wenigstens abschnittsweise, vorzugsweise vollständig gerades Meßrohr vorgesehen ist und die Gerade längs derer der erste Schwingungserzeuger, der erste Schwingungsaufnehmer und der zweite Schwingungsaufnehmer angeordnet sind, parallel zur Längsachse des Meßrohrs verläuft. Darüber hinaus ist es besonders bevorzugt, daß der erste Schwingungserzeuger in Längsrichtung des Meßrohrs gesehen im wesentlichen in der Mitte des Meßrohrs vorgesehen ist.

Wie zuvor schon angedeutet, ist das vorliegend beschriebene Coriolis-Massendurchflußmeßgerät insbesondere für einen derartigen Betrieb geeignet, bei dem Umfangsschwingungen des Meßrohrs erzeugt werden, also derartige Schwingungen, bei denen sich der Querschnitt des Meßrohrs während der Schwingungen geometrisch ändert. In diesem Zusammenhang ist es gemäß einer bevorzugten Weiterbildung der Erfindung vorgesehen, daß das Meßrohr im Verhältnis zu seinem Radius eine hinreichend geringe Wandstärke aufweist, um mit dem ersten Schwingungserzeuger anregbare und mit dem ersten und dem zweiten Schwingungsaumehmer erfaßbare Umfangsschwingungen, einschließlich der damit verbundenen Coriolis-Schwingungen, des Meßrohres zuzulassen. Dabei ist es besonders bevorzugt, daß die Wandstärke des Meßrohrs um den Faktor 50 geringer ist als der Radius des Meßrohrs. Weiterhin ist es in diesem Zusammenhang besonders bevorzugt, daß die Wandstärke kleiner oder gleich 0,5 mm, vorzugsweise kleiner oder gleich 0,25 mm, ist. Um durch das Coriolis-Massendurchflußmeßgerät nur eine geringe Drosselstelle zu erzeugen, ist es gemäß einer bevorzugten Weiterbildung der Erfindung ferner vorgesehen, daß die Länge des Meßrohrs in der Größenordnung des Radius des Meßrohrs liegt. Entsprechendes ist insbesondere deshalb möglich, da keine Schwingung des Meßrohrs insgesamt, wie z. B. bei einer schwingenden Saite, sondern lediglich eine Umfangsschwingung des Meßrohrs, also eine Deformation der Mantelflächen des Meßrohrs erfolgt, was durch die geringe Wandstärke des Meßrohrs erleichtert wird. Dabei ist schließlich gemäß einer bevorzugten Weiterbildung der Erfindung vorgesehen, daß das Verhältnis von Länge des Meßrohrs zu Radius des Meßrohrs kleiner oder gleich 6, vorzugsweise kleiner oder gleich 4 ist.

Schließlich sehen bevorzugte Weiterbildungen der Erfindung vor, daß das Meßrohr an seinen beiden Enden jeweils eine Ankopplungseinrichtung zum Anschluß des Meßrohrs an ein Rohrleitungssystem aufweist, wobei die Ankopplungseinrichtung derart ausgebildet ist, daß eine "weiche" Ankopplung des Meßrohrs an das Rohrleitungssystem erzielt wird. Insbesondere wird eine derartige "weiche" Ankopplung des Meßrohrs an das Rohrleitungssystem dadurch erzielt, daß als Ankopplungseinrichtungen Bälge vorgesehen sind. Der Übergang von Schwingungen aus dem Meßrohr des Coriolis-Massendurchflußmeßgeräts in das Rohrleitungssystem und damit mögliche in das Meßrohr zurückreflektierte Störschwingungen werden damit weitestgehend ausgeschlossen. Im übrigen ist es in diesem Zusammenhang zur Entkopplung des Meßrohrs des Coriolis-Massendurchflußmeßgeräts von dem Rohrleitungssystem hilfreich, wenn gemäß einer bevorzugten Weiterbildung der Erfindung in den beiden Endbereichen des Meßrohrs jeweils eine Endmasse vorgesehen ist. Die Endmasse verläuft vorzugsweise umfangsmäßig, insbesondere ringförmig um das Meßrohr herum.

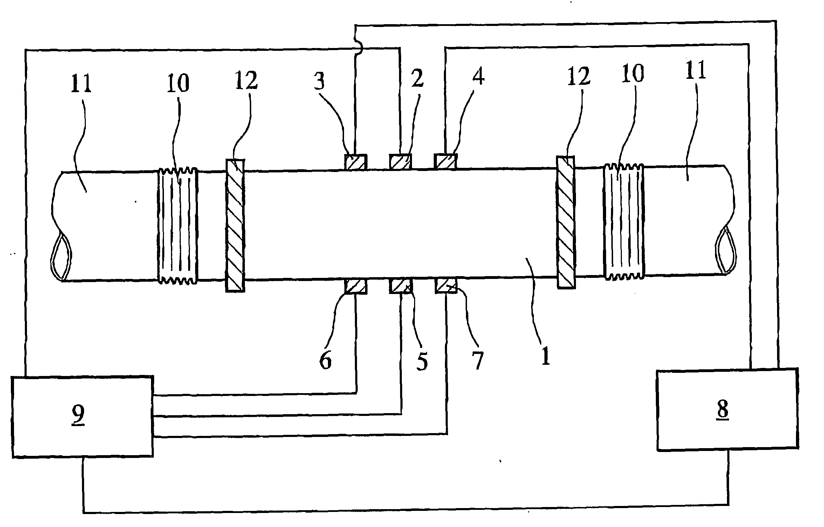

Im einzelnen gibt es nun eine Vielzahl von Möglichkeiten, das erfindungsgemäße Coriolis-Massendurchflußmeßgerät auszugestalten und weiterzubilden. Dazu wird auf die den unabhängigen Patentansprüchen nachgeordneten Patentansprüche sowie auf die nachfolgende Beschreibung eines bevorzugten Ausführungsbeispiels der Erfindung unter Bezugnahme auf die Zeichnung verwiesen. In der Zeichnung zeigt die einzige Figur schematisch ein Coriolis-Massendurchflußmeßgerät gemäß einem bevorzugten Ausführungsbeispiel der Erfindung.

Das aus der Figur ersichtliche, schematisch dargestellte Coriolis-Massendurchflußmeßgerät weist ein Meßrohr 1 auf, das im Betrieb des Coriolis-Massendurchflußmeßgeräts von einem strömenden, nicht weiter dargestellten Medium durchströmt wird. Zur Schwingungsanregung des Meßrohrs 1 ist ein erster Schwingungserzeuger 2 vorgesehen, und zwar in Längsrichtung des Meßrohrs 1 gesehen genau in der Mitte des Meßrohrs 1. In Längsrichtung des Meßrohrs 1 gesehen jeweils zum ersten Schwingungserzeuger 2 versetzt sind ein erster Schwingungsaufnehmer 3 und ein zweiter Schwingungsaufnehmer 4 vorgesehen. Dabei weisen der erste Schwingungsaufnehmer 3 und der zweite Schwingungsaufnehmer 4 jeweils den gleichen Abstand vom ersten Schwingungserzeuger 2 auf, wobei der erste Schwingungserzeuger 2, der erste Schwingungsaufnehmer 3 und der zweite Schwingungsaufnehmer 4 insgesamt längs einer Linie angeordnet sind, die parallel zur Längsachse des Meßrohrs 1 verläuft.

Dem ersten Schwingungserzeuger 2, dem ersten Schwingungsaufnehmer 3 und dem zweiten Schwingungsaufnehmer 4 jeweils um 180° auf der jeweils gleichen Länge des Meßrohrs gegenüberliegend sind nunmehr ein dritter Schwingungsaumehmer 5, ein zweiter Schwingungserzeuger 6 und ein dritter Schwingungserzeuger 7 vorgesehen. Dabei ist der dritte Schwingungsaufnehmer 5 gegenüber dem ersten Schwingungserzeuger 2, der zweite Schwingungserzeuger 6 gegenüber dem ersten Schwingungsaufnehmer 3 und der dritte Schwingungserzeuger 7 gegenüber dem zweiten Schwingungsaufnehmer 4 vorgesehen. Ferner ist bei dem vorliegend beschriebenen Coriolis-Massendurchflußmeßgerät gemäß einem bevorzugten Ausführungsbeispiel der Erfindung wesentlich, daß der erste Schwingungserzeuger 2 und der dritte Schwingungsaufnehmer 5, der erste Schwingungsaufnehmer 3 und der zweite Schwingungserzeuger 6 sowie der zweite Schwingungsaufnehmer 4 und der dritte Schwingungserzeuger 7 die gleiche Masse aufweisen. Bei dem hier beschriebenen bevorzugten Ausführungsbeispiel der Erfindung ist sogar vorgesehen, daß alle Schwingungsaufnehmer 3, 4, 5 und alle Schwingungserzeuger 2, 6, 7 die gleiche Masse aufweisen. Damit wird insgesamt ein "ausbalanciertes" Meßrohr 1 erzielt.

Mit dem ersten Schwingungserzeuger 2, der von einer Schwingungsanregungssteuereinrichtung 9 angesteuert wird, werden Umfangsschwingungen des Meßrohrs 1 erzeugt. Dazu ist ein Meßrohr 1 vorgesehen, das im Verhältnis zu seinem Radius eine hinreichend geringe Wandstärke aufweist, um mit dem ersten Schwingungserzeuger 2 anregbare und mit dem ersten Schwingungsaufnehmer 3 und dem zweiten Schwingungsaufnehmer 4 erfaßbare Umfangsschwingungen des Meßrohrs zuzulassen, wobei auch Coriolis-Schwingungen erfaßt werden können. Konkret ist dazu vorgesehen, daß die Wandstärke des Meßrohrs 1 wenigstens um den Faktor 50 geringer ist als der Radius des Meßrohrs, wobei eine Wandstärke des Meßrohrs gewählt wird, die geringer als 0,5 mm ist. Damit kann, wie der Figur entnehmbar, eine derartige, kurze Länge des Meßrohrs 1 erzielt werden, die in der gleichen Größenordnung des Radius des Meßrohrs 1 liegt. Der erste Schwingungsaufnehmer 3 und der zweite Schwingungsaufnehmer 4 dienen, wie üblich, zur Erfassung des Massendurchflusses, indem die mit dem ersten Schwingungsaufnehmer 3 und dem zweiten Schwingungsaufneluner 4 erfaßten Signale einer Auswerteeinrichtung 8 zugeführt werden,

Durch das zusätzliche Vorsehen des dritten Schwingungsaufhehmers 5 sowie des zweiten Schwingungserzeugers 6 und des dritten Schwingungserzeugers 7 ergeben sich neben der Tatsache, daß auf diese Weise ein "ausbalanciertes" Meßrohr 1 erzielt wird, folgende Möglichkeiten:

Das von dem dritten Schwingungsaufnehmer 5 erfaßte Schwingungssignal wird der Schwingungsanregungssteuereinrichtung 9 zugeführt, die ja die Schwingungsanregung, also insbesondere die Anregung des ersten Schwingungserzeugers 2 steuert. Durch die spezielle Anordnung des dritten Schwingungsaufnehmers 5 auf der gleichen Länge des Meßrohrs 1 direkt gegenüber dem für die Schwingungsanregung des Meßrohrs 1 im wesentlichen maßgebenden ersten Schwingungserzeugers 2 wird ein Feedback-Signal durch den dritten Schwingungsaufnehmer 5 erfaßbar, das in der Schwingungsanregungssteuereinrichtung 9 für die Ansteuerung des ersten Schwingungserzeugers 2 genutzt werden kann, z. B. im Rahmen einer Nachführung der Allregungsfrequenz auf eine temperaturabhängige Resonanzfrequenz des Meßrohrs mittels eines PLL (Phase Locked Loop).

Außerdem wird durch die zusätzlichen Schwingungserzeuger 6, 7 eine Anregung des Meßrohrs 1 in einem zusätzlichen Mode zum Anregungsmode möglich, z. B. im Coriolis-Mode. Damit eröffnet sich die Möglichkeit einer Echtzeit-Bestimmung charakteristischer Parameter, wie der Sensitivität und/oder des Nullpunkts des Coriolis-Massendurchflußmeßgeräts, wie z. B. in der DE 100 02 635 Al grundsätzlich beschrieben. Dort ist die Anregung des Meßrohrs des Coriolis-Massendurchflußmeßgeräts insgesamt, also wie eine Saite, beschrieben, während vorliegend Umfangsschwingungen des Meßrohrs 1. angeregt werden sollen. Die Grundsätze des in der DE 100 02 635 A1 beschriebenen Verfahrens sind jedoch ohne weiteres auch auf das vorliegende Ausführungsbeispiel übertragbar.

Insgesamt gilt damit, daß durch das zusätzliche Vorsehen des dritten Schwingungsaufnehmers 5 gegenüber dem ersten Schwingungserzeuger 2, des zweiten Schwingungserzeugers 6 gegenüber dem ersten Schwingungsaufnehmer 3 und des dritten Schwingungserzeugers 7 gegenüber dem zweiten Schwingungsaufnehmer 4 aufgrund der gleichen Massen aller Schwingungserzeuger 2, 6, 7 und aller Schwingungsaufnehmer 3, 4, 5 einerseits ein "ausbalanciertes" Meßrohr und andererseits zusätzliche Auswerte-, Steuer- und "Echtzeit-Kalibriermöglichkeiten" erzielt werden. Durch Anordnung, Ausgestaltung und Funktion des zusätzlichen Schwingungsaufnehmers 5 und der zusätzlichen Schwingungserzeuger 6, 7 ergibt sich also in ganz besonders synergistischer Weise ein derartiges Coriolis-Massendurchflußmeßgerät dessen Meßgenauigkeit und Reproduzierbarkeit gegenüber herkömmlichen Coriolis-Massendurchflußmeßgeräten wesentlich verbessert ist.

Im übrigen weist das Coriolis-Massendurchflußmeßgerät gemäß dem vorliegend beschriebenen bevorzugten Ausführungsbeispiel der Erfindung weitere Maßnahmen auf, um die Meßgenauigkeit und die Störanfälligkeit zu verringern. Das Meßrohr 1 ist nämlich über als Bälge ausgebildete Ankopplungseinrichtungen 10 mit dem Rohrleitungssystem 11 verbunden, in das das Coriolis-Massendurchflußmeßgerät eingebaut ist, so daß eine "weiche" Ankopplung des Meßrohrs 1 an das Rohrleitungssystem 11 erzielt wird. Auf diese Weise wird quasi eine schwingungsmäßige Entkopplung des Meßrohrs 1 von dem Rohrleitungssystem 11 erzielt, so daß nur noch in geringem Maße Schwingungen aus dem Meßrohr 1 in das Rohrleitungssystem 11 übertreten und von dort als reflektierte Schwingungen in das Meßrohr 1 zurück reflektiert werden können.

Darüber hinaus ist gemäß dem vorliegend beschriebenen bevorzugten Ausführungsbeispiel der Erfindung vorgesehen, daß das Meßrohr 1 in seinen beiden Endbereichen jeweils eine umfangsmäßig, nämlich ringförmig verlaufende Endmasse 12 aufweist. In der Praxis hat sich gezeigt, daß diese Endmassen 12 ganz wesentlich dazu beitragen, das Meßrohr 1 von dem Rohrleitungssystem 11 schwingungsmäßig weiter zu isolieren. Insgesamt wird nämlich durch die als Bälge ausgebildeten Ankopplungseinrichtungen 10 und die Endmassen 12 zusammen ein Frequenzfilter erzeugt, das die schwingungsmäßige Wechselwirkung mit dem Rohrleitungssystem 11 ganz wesentlich vermindert. Darüber hinaus werden aufgrund des "ausbalancierten" Meßrohrs, nämlich aufgrund des Vorsehens des zusätzlichen Schwingungsaufnehmers 5 sowie der zusätzlichen Schwingungserzeuger 6, 7, wie zuvor erläutert, praktisch keine unsymmetrischen Schwingungen mehr erzeugt, die das System bei herkömmlichen Coriolis-Meßgeräten wesentlich gestört haben.

## Patentansprüche

1. Coriolis-Massendurchflußmeßgerät, mit einem Meßrohr (1) zum Führen eines strömenden Mediums, einem ersten Schwingungserzeuger (2) zur Schwingungsanregung des Meßrohrs und einem ersten Schwingungsaufnehmer (3) und einem zweiten Schwingungsaufnehmer (4) zur Erfassung von Schwingungen des Meßrohrs (1), wobei der erste Schwingungserzeuger (2), der erste Schwingungsaufnehmer (3) und der zweite Schwingungsaumehmer (4) in Längsrichtung des Meßrohrs (1) gesehen jeweils voneinander beabstandet sind und der erste Schwingungserzeuger (2) von einer Schwingungsanregungssteuereinrichtung (9) angesteuert wird, **dadurch gekennzeichnet, daß** ein dritter Schwingungsaufnehmer (5) vorgesehen ist, der dem ersten Schwingungserzeuger (2) auf der gleichen Länge des Meßrohrs (1) gegenüberliegt.

2. Coriolis-Massendurchflußmeßgerät nach Anspruch 1, **dadurch gekennzeichnet, daß** die Masse des ersten Schwingungserzeugers (2) im wesentlichen der Masse des dritten Schwingungsaufnehmers (5) entspricht.

3. Coriolis-Massendurchflußmeßgerät nach Anspruch 1 oder 2, **dadurch gekennzeichnet, daß** ein zweiter Schwingungserzeuger (6) und ein dritter Schwingungserzeuger (7) vorgesehen sind, wobei der zweite Schwingungserzeuger (6) dem ersten Schwingungsaufnehmer (3) und der dritte Schwingungserzeuger (7) dem zweiten Schwingungsaumehmer (4) auf der jeweils gleichen Länge des Meßrolus (1) gegenüberliegt.

4. Coriolis-Massendurchflußmeßgerät nach Anspruch 3, **dadurch gekennzeichnet, daß** die Masse des zweiten Schwingungserzeugers (6) im wesentlichen der Masse des ersten Schwingungsaufnehmers (3) entspricht und die Masse des dritten Schwingungserzeugers (7) im wesentlichen der Masse des zweiten Schwingungsaufnehmers (4) entspricht.

5. Corielis-Massendurchflußmeßgerät, mit einem Meßrohr (1) zum Führen eines strömenden Mediums, einem ersten Schwingungserzeuger (2) zur Schwingungsanregung des Meßrohrs (1) und einem ersten Schwingungsaufnehmer (3) und einem zweiten Schwingungsaufnehmer (4) zur Erfassung von Schwingungen des Meßrohrs (1), wobei der erste Schwingungserzeuger (2), der erste Schwingungsaufnehmer (3) und der zweite Schwingungsaufnehmer (4) in Längsrichtung des Meßrohrs (1) gesehen jeweils voneinander beabstandet sind und der erste Schwingungserzeuger (2) von einer Schwingungsanregungssteuereinrichtung (9) angesteuert wird, **dadurch gekennzeichnet, daß** ein zweiter Schwingungserzeuger (6) und ein dritter Schwingungserzeuger (7) vorgesehen sind, wobei der zweite Schwingungserzeuger (6) dem ersten Schwingungsaufnehmer (3) und der dritte Schwingungserzeuger (7) dem zweiten Schwingungsaufnehmer (4) auf der jeweils gleichen Länge des Meßrohrs (1) gegenüberliegt.

6. Coriolis-Massendurchflußmeßgerät nach Anspruch 5, **dadurch gekennzeichnet, daß** die Masse des zweiten Schwingungserzeugers (6) im wesentlichen der Masse des ersten Schwingungsaufnehmers (3) entspricht und die Masse des dritten Schwingungserzeugers (7) im wesentlichen der Masse des zweiten Schwingungsaufnehmers (4) entspricht.

7. Coriolis-Massendurchflußmeßgerät nach Anspruch 5 oder 6, **dadurch gekennzeichnet, daß** ein dritter Schwingungsaufnehmer (5) vorgesehen ist, der dem ersten Schwingungserzeuger (2) auf der gleichen Länge des Meßrohrs (1) gegenüberliegt.

8. Coriolis-Massendurchflußmeßgerät nach Anspruch 7, **dadurch gekennzeichnet, daß** die Masse des ersten Schwingungserzeugers (2) im wesentlichen der Masse des dritten Schwingungsaufnehmers (5) entspricht.

9. Coriolis-Massendurchflußmeßgerät nach einem der Ansprüche 1 bis 4, 7 oder 8, **dadurch gekennzeichnet, daß** das von dem dritten Schwingungsaufnehmer (5) erfaßte Schwingungssignal zur Schwingungsanregungssteuereinrichtung (9) geführt und dort als Feedback-Signal zur Steuerung der Schwingungsanregung verwendet wird.

10. Coriolis-Massendurchflußmeßgerät nach einem der Ansprüche 1 bis 9, **dadurch gekennzeichnet, daß** der erste Schwingungsaufnehmer (3) und der zweite Schwingungsaufnehmer (4) im jeweils gleichen Abstand vom ersten Schwingungserzeuger (2) auf zwei voneinander verschiedenen Seiten des ersten Schwingungserzeugers (2) vorgesehen sind.

11. Coriolis-Massendurchflußmeßgerät nach Anspruch 10, **dadurch gekennzeichnet, daß** der erste Schwingungserzeuger (2), der erste Schwingungsaufnehmer (3) und der zweite Schwingungsaufnehmer (4) längs einer Geraden angeordnet sind.

12. Coriolis-Massendurchflußmeßgerät nach Anspruch 11, **dadurch gekennzeichnet, daß** ein gerades Meßrohr (1) vorgesehen ist und die Gerade längs derer der erste Schwingungserzeuger (2), der erste Schwingungsaumehmer (3) und der zweite Schwingungsaufnehmer (4) angeordnet sind, parallel zur Längsachse des Meßrohrs (1) verläuft.
